# EUROPÄISCHE PATENTSCHRIFT

(11) **EP 0 462 046 B1**
(45) Veröffentlichungstag und Bekanntmachung des Hinweises auf die Patenterteilung: **17.05.1995**
(21) Anmeldenummer: 91710013.3
(22) Anmeldetag: 20.04.1991
(51) Int. Cl.: B29C 45/67

(54) **Hydraulikeinrichtung an der Formschliesseinheit einer Kunststoff-Spritzgiessmaschine**
Hydraulic device at the die closing unit of a plastics injection moulding machine
Installation hydraulique sur le dispositif de fermeture pour presse à injection de matières plastiques

(30) Priorität: 08.06.1990 DE 4018334
(43) Veröffentlichungstag der Anmeldung: 18.12.1991
(73) Patentinhaber: Hehl, Karl, 72290 Lossburg (DE)
(72) Erfinder: Hehl, Karl, 72290 Lossburg (DE)
(74) Vertreter: Reinhardt, Harry

## Beschreibung

Die Erfindung betrifft eine Hydraulikeinrichtung entsprechend dem Oberbegriff des Anspruches 1.

Bei einer bekannten Hydraulikeinrichtung dieser Art (DE 36 44 181 C1; DE 38 44 432 C1) wird die Spritzgießform dadurch geschlossen, daß der gießformseitige Zylinderraum des Antriebszylinders über das Regelventil bei einer überlagernden Druckregelung mittels Druckfühler mit Druckmedium beschickt wird. Das bei der Schließbewegung aus dem rückwärtigen Zylinderraum des Antriebszylinders verdrängte Druckmedium gelangt über eine mit Druckfühler für eine überlagernde Druckregelung versehene Leitung und über das Regelventil zum Tank. Infolge der Differenzflächen des Druckzylinders und des Ausgleichszylinders wird beim Schließen eine geringe Menge an Druckmedium frei, das zwecks Temperaturausgleich aus dem Hochdruckraum des Druckzylinders unmittelbar zum Tank fließt.

Der Erfindung liegt die Aufgabe zugrunde, eine Hydraulikeinrichtung der eingangs genannten Gattung derart weiterzubilden, daß die Leistung der Kunststoff-Spritzgießmaschine bei schonenden Geschwindigkeits- und Druckprofilen der Formträgerbewegung wesentlich erhöht werden kann.

Diese Aufgabe wird erfindungsgemäß durch die im Anspruch 1 genannten Merkmale gelöst.

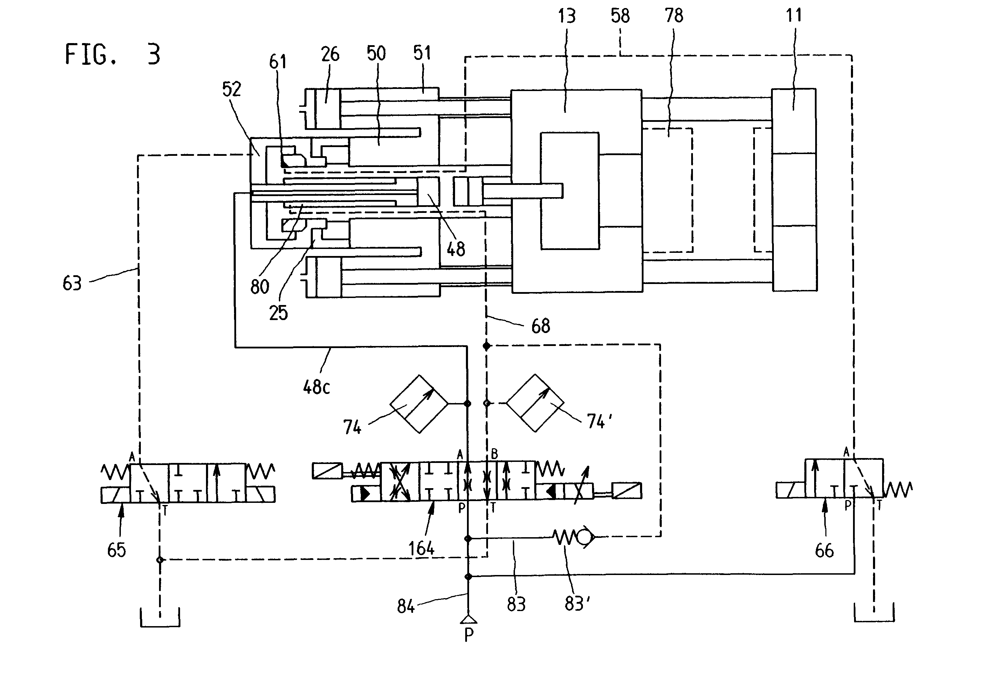

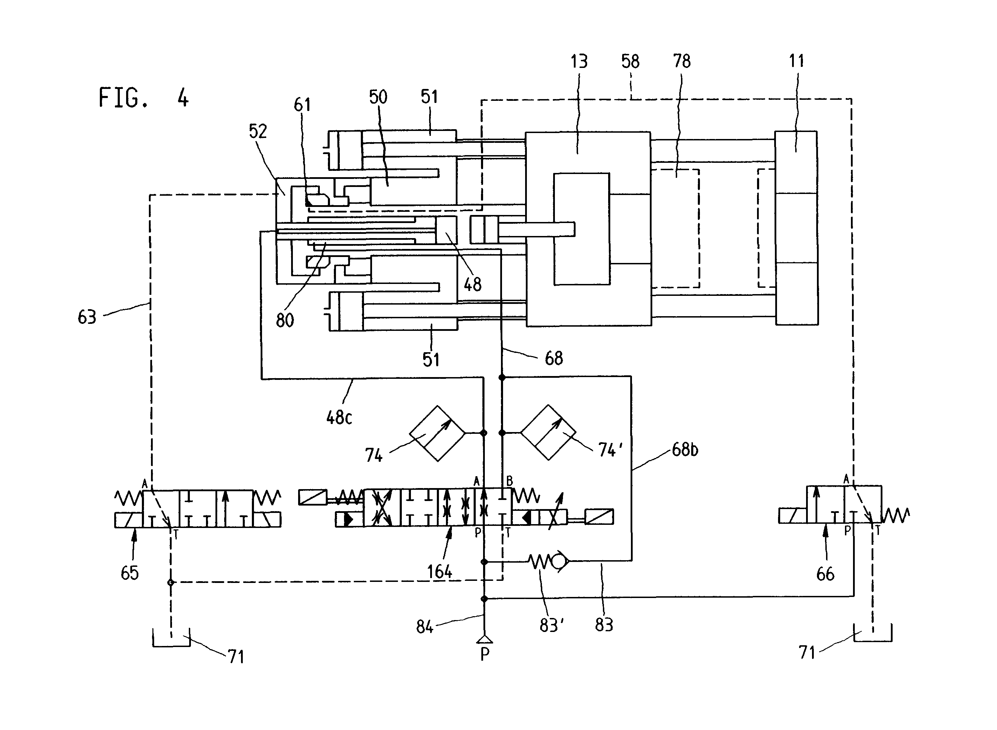

Bei einer solchen Lösung sind die Schließewegungen beim Schließen der Formschließeinheit beschleunigt. Die hierfür erforderlichen Geschwindigkeitsprofile und Druckprofile können den jeweiligen maschinenbaulichen und spritztechnischen Erfordernissen in höherem Maße angepaßt werden. Die Schließbewegung beginnt bei gleichzeitiger beidseitiger Beeinflussung des stationären Differenzkolbens des Antriebszylinders mit einseitiger Kolbenbeaufschlagung und dadurch bedarfsweise höherer Beschleunigungskraft bis zu einer bestimmten erwünschten Geschwindigkeit (Übergangsschaltung gemäß Fig. 3). Bei weiterem Durchschalten des 4/4-Wegeventils ergibt sich ein stufenloser Übergang von der direkten Kolbenbeaufschlagung (Übergangsschaltstellung gemäß Fig. 3) auf die Differenzschaltung (Fig. 4) statt. In der ersten zeitlichen Phase dieses Übergangs fließt im Gefolge des Weiterschaltens des Kolbens des 4/4-Wegeventils zunächst noch die größere Menge an Druckmedium aus dem rückwärtigen Zylinderraum 80 des Antriebszylinders über die Verbindung 'B' zu 'T' des 4/4-Wegeventils zum Tank zurück. Die kleinere Menge an Druckmedium wird demzufolge noch über das Rückschlagventil 83' der Druckleitung 84 und damit dem gießformseitigen Zylinderraum 48 des Antriebszylinders zugeführt. Im Gefolge einer weiteren Bewegung des Kolbens des 4/4-Wegeventils in Richtung Differenz-Schaltstellung (Fig. 4) wird die rückfließende Menge an Druckmedium von 'B' zu 'T' immer geringer und die Menge an Druckmedium, welche über das Rückschlagventil 83' in die Druckleitung 84 gelangt, immer größer. Bei Erreichen der Differenzschaltung fließt kein Druckmedium mehr über die Verbindung 'B' zu 'T' des 4/4-Wegeventils zum Tank zurück; vielmehr wird das gesamte, aus dem rückwärtigen Zylinderraum 80 des Antriebszylinders verdrängte Druckmedium über das Rückschlagventil der Verbindungsleitung 83 der Druckleitung 84 zugeführt. Damit ist die maximale Schließgeschwindigkeit bei voller Differenzschaltstellung (Fig.4) erreicht. Um ein hartes Aufeinandertreffen der Gießformhälften am Ende der Schließbewegung zu vermeiden, wird die Differenzschaltstellung in der Regel in gleicher Weise wie beim allmählichen Übergang von der anfänglichen Übergangsschaltstellung (Fig. 3) in die Differenzschaltung (Fig. 4) bei annäherungsweise stufenloser Querschnittsveränderung der Durchflußöffnungen im 4/4-Wegeventil in die Übergangsschaltstellung (Fig. 3) überführt.

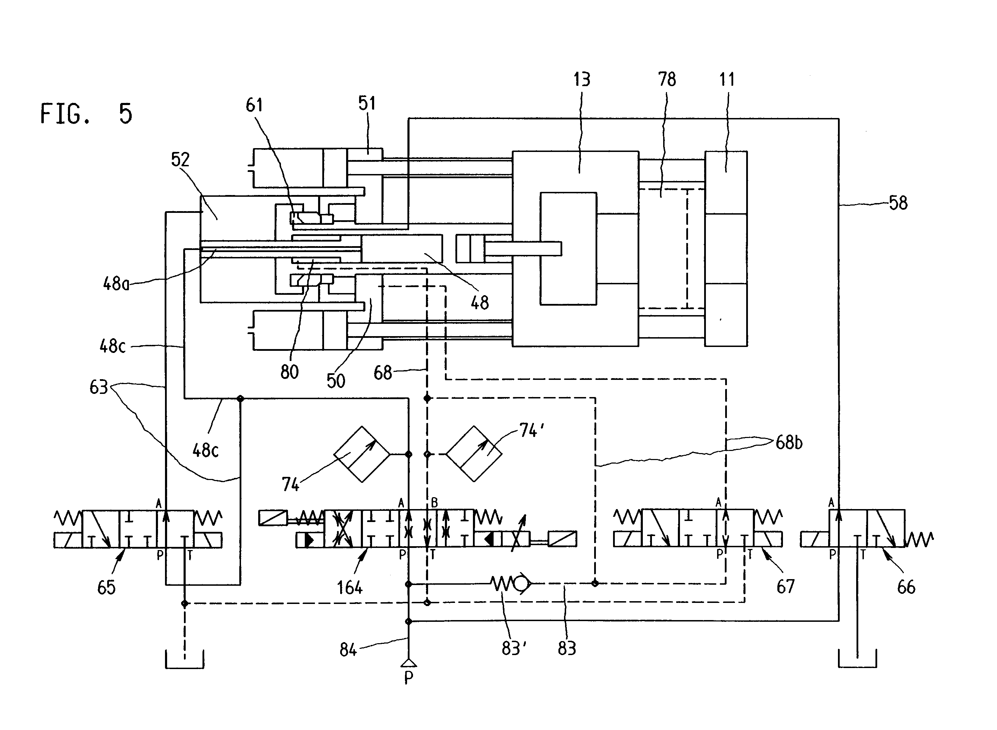

Bei der erfindungsgemäßen Ausbildung können darüber hinaus die Voraussetzungen dafür vorliegen, daß die Endphase der Schließbewegung (Übergangsschaltstellung gemäß Fig. 3) in eine mittels Druckfühler geregelte Auslaufbewegung stufenlos übergeleitet werden kann (Endschaltung gemäß Fig. 5), in welcher der Hochdruckraum des Druckzylinders bereits auf 'Zuhaltedruck' gesteuert ist, so daß die Spritzgießform bei weiterem ruhigem Lauf nahezu erschütterungsfrei schließt.

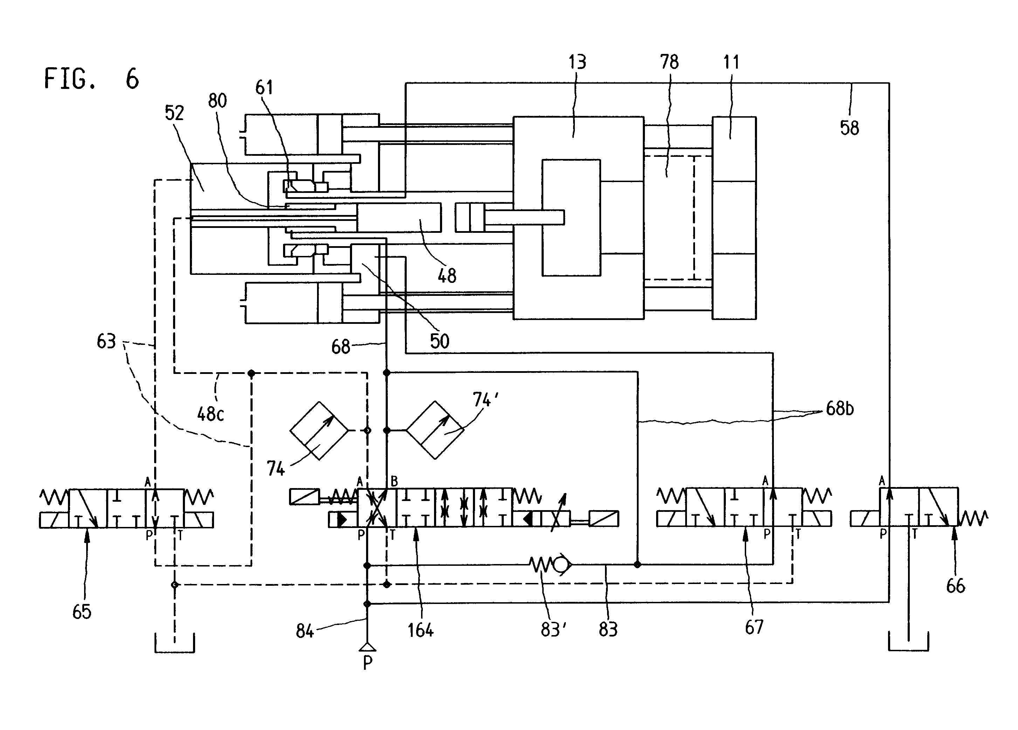

Schließlich liegen bei der erfindungsgemäßen Ausbildung die Voraussetzungen dafür vor, daß die Spritzgießform mit großer Kraft (Aufreißbewegung gemäß Fig. 6) druckgeregelt und unter Anpassung an die jeweiligen Erfordernisse geöffnet werden kann.

In Versuchen ergab sich, daß die Geschwindigkeit der Schließbewegung bei Differenzstellung im Vergleich zur bisher üblichen Schließart mit ca. 600 mm/s auf ca. 900 mm/s gesteigert werden kann. Geht man von einer Dauer des Spritzzyklus von 5-10 sec. aus, so kann sich eine Zeitersparnis im Spritzzyklus bis hin zu 10% ergeben, was bei der Vielzahl von Spritzzyklen einer im Dauerbetrieb befindlichen Spritzgießmaschine von großer Bedeutung sein kann.

All dies führt letztlich zu einem sehr erschütterungsarmen Ablauf der Spritzzyklen und vermindert trotz erhöhter 'Schußzahl' pro Zeiteinheit die mechanischen Beanspruchungen kritischer Maschinenteile. Die Hydraulikeinrichtung ist unabhängig von der Anzahl ihrer Druckzylinder bzw. Ausgleichszylinder und deren Anordnung einsetzbar.

Nachstehend wird die Erfindung anhand der Zeichnung erläutert.

Es zeigen:
Fig. 1, 2 den Grundschaltplan der Hydraulikeinrichtung bei unterschiedlicher Anzahl und unterschiedlicher Anordnung der Zylinder der Formschließeinheit,
Fig. 3, 4 die Hydraulikeinrichtung beim Schließen der Spritzgießform ohne und mit Differenzschaltung des Antriebszylinders,
Fig. 5 das Schließen der Spritzgießform am Ende einer durch die Zuschaltung des Hochdruckraumes (52) gekennzeichneten Endschließphase und
Fig. 6 das Öffnen der Spritzgießform mit hoher Auffahrkraft.

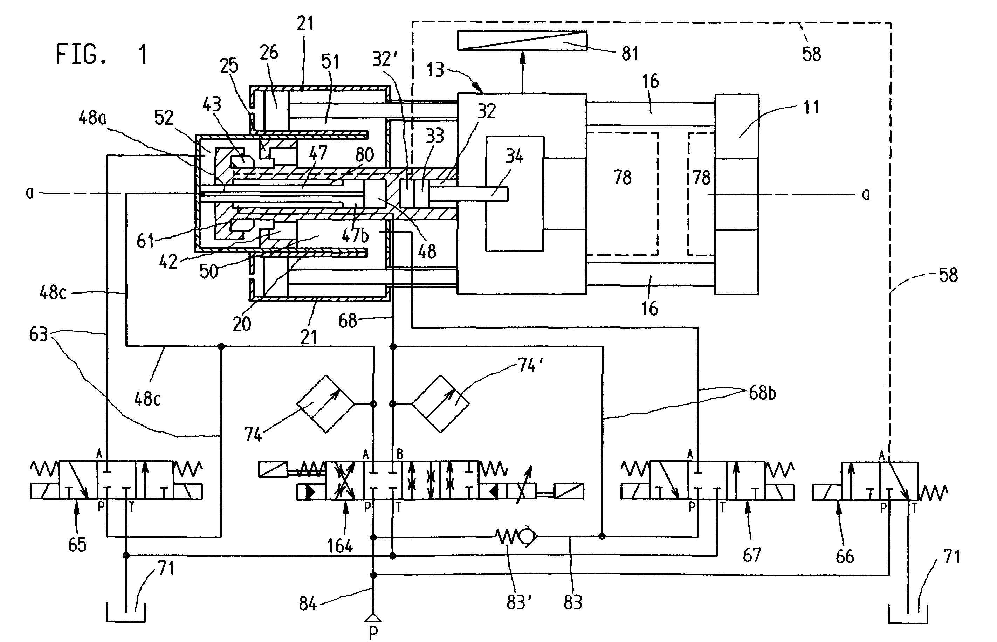

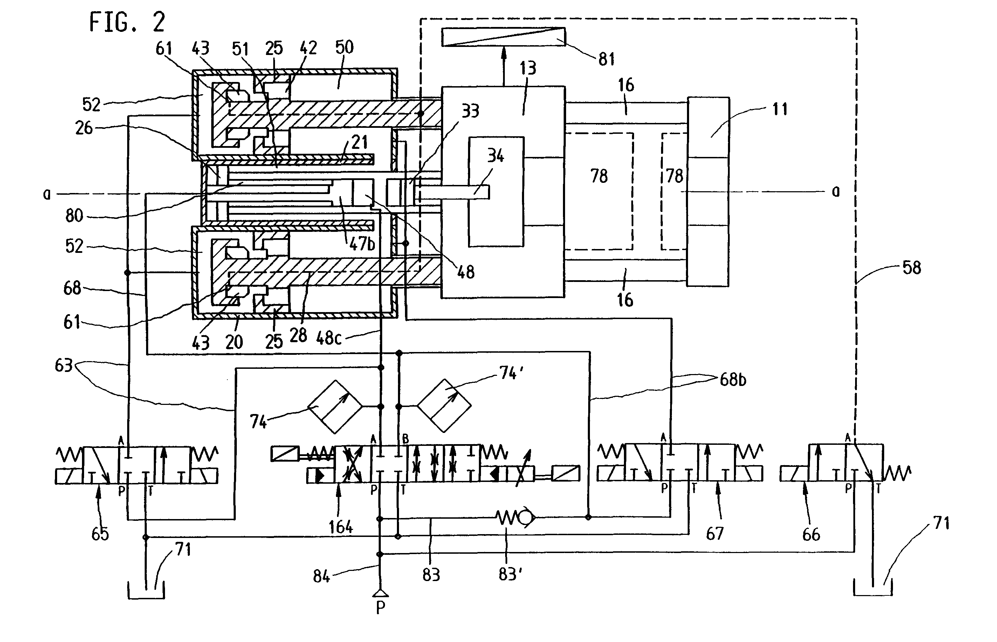

Die Figuren 1, 2 zeigen den Grundschaltplan an Formschließeinheiten, die sich durch die Anzahl ihrer Druck- bzw. Ausgleichszylinder und deren Anordnung unterscheiden.

Die Fign. 3 bis 6 zeigen unterschiedliche Schaltstellungen der Hydraulikeinrichtung beim Schließen, Zuhalten und Öffnen der Spritzgießform. In den Fign. 3-6 sind lediglich die in Anspruch genommenen Teile der Hydraulikeinrichtung dargestellt, wobei die zu den unterschiedlichen Zylinderräumen führenden Druckleitungen in ausgezogener Linie und die jeweiligen Rückleitungen zum Tank in gestrichelter Linienführung ausgeführt sind.

Die bauliche Gestaltung der Formschließeinheit und der Hydraulikeinrichtung ist vorzugsweise aus den Fign. 1 und 2 erkennbar: ein stationärer Formträger 11 ist am Maschinenfuß befestigt. Der bewegbare Formträger 13 ist auf Säulen 16 verschiebbar angeordnet. Die Hydraulikeinrichtung umfaßt eine Regelpumpe P mit Regelventil 164, wenigstens einen hydraulischen Druckzylinder 20, 25 zum Aufbau des Zuhaltedruckes für die Spritzgießform 78 und wenigstens einen hydraulischen Antriebszylinder mit Kolben 47b sowie wenigstens einen einseitig beaufschlagbaren Ausgleichszylinder. Die vom Druckkolben 25 begrenzten Zylinderräume (Hochdruckraum 52 und Niederdruckraum 50) des Druckzylinders 20, 25 sind über steuerbare Überströmkanäle 42 miteinander in Verbindung setzbar. Zum Schließen und Öffnen der Überströmkanäle 42 ist ein Ringkolben 43 vorgesehen, der aus einem Zylinderraum 61 beaufschlagbar ist. Der Zylinderraum 61 steht mit dem Tank 71 über eine Leitung 58 in Verbindung, die von einem Steuerschieber 66 beherrscht ist. Ein in der Achse a-a der Formschließeinheit liegender hydraulischer Antriebszylinder mit stationärem Kolben 47b ermöglicht das Schließen und Öffnen der Spritzgießform 78. Der eigentliche Zylinder dieses Antriebszylinders ist im Ausführungsbeispiel der Fig. 1 durch die Kolbenstange des Druckkolbens 25, im Ausführungsbeispiel der Fig. 2 durch die Kolbenstange des Kolbens 26 des Ausgleichszylinders 21, 26 gebildet. Im Beispiel der Fig. 1 sind ein einziger, zum zentralen Antriebszylinder koaxialer Druckzylinder 20, 25 und zwei Ausgleichszylinder 21, 26 vorgesehen. Letztere sind diametral zum Druckzylinder 20, 25 angeordnet. Im Beispiel der Fig. 2 sind ein einziger, zum zentralen Antriebszylinder koaxialer Ausgleichszylinder 21, 26 und zwei Druckzylinder 20, 25 vorgesehen. Letztere sind diametral zum Ausgleichszylinder 21, 26 angeordnet. Der hydraulische Antriebszylinder mit stationärem Kolben 47b schließt und öffnet die Spritzgießform 78 im Zusammenwirken mit einem Streckenspannungswandler 81 und mit Hilfe des Regelventils 164 bei gleichzeitiger, beidseitiger Druckbeeinflussung des Kolbens 47b nach einem Mengenprogramm. Der bzw. die Zylinderräume 51 der Ausgleichszylinder 21, 26 stehen mit dem Niederdruckraum 50 bzw. den Niederdruckräumen 50 in offener Verbindung. In dem vom Regelventil 164 zu den Zylinderräumen 48, 80 des Antriebszylinders führenden Verbindungskanälen 48c; 68 ist je ein Druckfühler 74, 74' vorgesehen. Die genannten Verbindungskanäle 48c; 68 stehen über Zweigkanäle 63; 68b mit dem Hochdruckraum 52 und dem Niederdruckraum 50 in Verbindung. Die genannten Zweigkanäle sind je von einem Steuerschieber 65; 67 beherrscht. Die Kolben 25, 26 von Druckzylinder 20, 25 und Ausgleichzylinder 21, 26 stehen über ihre Kolbenstangen mit dem Formträger 13 in Verbindung.

Das 4/4-Wegeventil kann ein Proprotionalventil mit 0-Überschneidung sein, dessen Schaltstellungen bei stufenloser Querschnittsveränderung ineinander überführbar sind.

Die Zweigleitung 68b steht mit dem von der Regelpumpe P zum 4/4-Wegeventil 164 stehenden Abschnitt 84 der Druckleitung über eine Verbindungsleitung 83 in Verbindung, welche mit einem Rückschlagventil 83' versehen ist.

In allen Schaltstellungen der Schließbewegung ist der stationäre Kolben 47b des Antriebszylinders mit Kolben 47b aus dem gießformseitigen Zylinderraum 48 beaufschlagt.

Die Hydraulikeinrichtung arbeitet wie folgt: Die Schließbewegung beginnt bei gleichzeitiger beidseitiger Beeinflussung des stationären, als Differenzkolben ausgebildeten Kolbens 47b des Antriebszylinders mit einseitiger Kolbenbeaufschlagung. So-mit kann in dieser ersten Phase der Schließbewegung eine zunehmende Beschleunigungskraft bis zu einer bestimmten erwünschten Geschwin digkeit realisiert werden (Fig. 3). Bei weiterem Durchschalten des 4/4-Wegeventils 164 nach links findet eine stufenlose Umsteuerung von direkter Kolbenbeaufschlagung (Fig. 3) auf Differenzschaltung (Fig. 4) statt. Am Anfang dieser Umsteuerung fließt im Gefolge eines Weiterschaltens des Kolbens des 4/4-Wegeventils zunächst noch die weitaus größere Menge des aus dem rückwärtigen Zylinderraum 80 zurückfließenden Druckmediums über die Verbindung 'B' zu 'T' des 4/4-Wegeventils 164 zum Tank 71 zurück. Die kleinere Menge an Druckmedium wird noch über das Rückschlagventil 83' der Druckleitung 84 und damit dem Zylinderraum 48 zugeführt. Im Gefolge einer weiteren Vrschiebung des Kolbens des 4/4-Wegeventils in Richtung auf die Differenzschaltsstellung mit höherer Schließgeschwindigkeit wird die rückfließende Menge an Druckmedium von 'B' zu 'T' des 4/4 Wegeventils immer geringer und die Menge an Druckmedium, welche über das Rückschlagventil 83' in die Druckleitung 84 gelangt, immer größer. Bei Erreichen der Differenzschaltstellung gelangt die gesamte, aus dem rückwärtigen Zylinderraum 80 verdrängte Menge an Druckmedium über das Rückschlagventil in die Druckleitung 84 und damit zum 4/4-Wegeventil 164, so daß die volle Differenzschaltstellung mit maximaler Schließgeschwindigkeit erreicht ist. In diesem Zusammenhang ist darauf hinzuweisen, daß das Durchschalten des 4/4-Wegeventils von der Mittelstellung gemäß Figuren 1, 2 nach links in die Differenzschaltstellung gemäß Fig. 4 sowohl stufenlos im obigen Sinne, aber auch in verschiedenen Stufen ausgeführt werden kann. Die Schaltzeit für den Gesamthub beträgt bei direkter Durchschaltung etwa 25 msec. Dies bedeutet, daß die Übergangsschaltstellung (Fig. 3), mit welcher die Schließbewegung beginnt, von extrem kurzer Dauer sein kann, d.h. wenige msec betragen kann. Sie kann aber auch bedarfsweise zeitlich ausgedehnt werden.

Während der gesamten Schließ- und Öffnungsbewegung ist dem Geschwindigkeitsprofil eine überlagerte Druckregelung zugeschaltet. Bei Erreichung der programmierten Druckgröße geht die Geschwindigkeitsregelung bzw. -Steuerung, ausgelöst durch Impulse der Druckfühler 74 bzw. 74' in eine Druckregelung über.

In aller Regel vollzieht sich die Schließbewegung im wesentlichen bei Differenzschaltstellung, in welcher das 4/4-Wegeventil sich in Linksstellung befindet. In wahlweiser zeitlicher Aufteilung wird je nach Geschwindigkeitserfordernis das aus dem Zylinderraum 80 des Antriebszylinders verdrängte Druckmedium direkt zum Tank 71 oder über den mit Rückschlagventil 83' versehenen das 4/4-Wegeventil überbrückenden Zweigkanal 68b; 83 in die Druckleitung 84 zwischen der Hydraulikpumpe p und dem 4/4-Wegeventil 164 eingespeist, und zwar bei überlagerter Druckregelung durch die Druckfühler 74; 74'.

Nach der Differenzschaltstellung kann also das 4/4-Wegeventil erneut in die der Differenzschaltstellung (Fig. 4) benachbarte Übergangsschaltung (Fig. 3) geschaltet werden. In dieser Übergangsschaltstellung wird das aus dem Zylinderraum 80 verdrängte Druckmedium über den Ventilkanal 68 bei einer überlagerten Druckregelung unmittelbar in den Tank 71 eingeleitet.

In einem allerletzten Abschnitt der Schließbewegung können bei aufrecht erhaltener Übergangsschaltstellung (Fig. 3) zusätzlich folgende Verbindungen hergestellt werden:

Der vom 4/4-Wegeventil zum Zylinderraum 48 des Antriebszylinders führende Verbindungskanal 48c wird über den vom Steuerschieber 65 beherrschten Zweigkanal 63 mit dem Hochdruckraum 52 in Verbindung gesetzt und der vom Zylinderraum 80 des Antriebszylinders zum Tank 71 führende Verbindungskanal 68 wird über den vom Steuerschieber 67 beherrschten Zweigkanal 68b mit dem Niederdruckraum 50 in Verbindung gesetzt (Fig. 5). In dieser allerletzten, relativ langsamen Schließphase wird Druckmedium in den Hochdruckraum 52 bei geschlossenen Überströmkanälen 42 in Druckkolben 25 eingespeist und eine entsprechend große Ölmenge aus dem Niederdruckraum 50 über die Zweigleitung 68b und das 4/4-Wegeventil in den Tank 71 abgeleitet. Da diese letzte Phase extrem kurz ist, bleibt insgesamt der Grundsatz gewahrt, daß der ganz überwiegende Teil des Druckmediums über den gesamten Spritzzyklus in einem inneren Kreislauf des Hydrauliksystems verbleibt und nur ein geringfügiger Teil in den Tank gelangt, was zwecks Temperaturausgleich erwünscht ist.

Ist es erforderlich die Spritzgießform mit großer Kraft zu öffnen, so wird das 4/4-Wegeventil in Rechtsstellung gemäß Fig. 6 geschaltet. In dieser Stellung gelangt das Druckmedium von der Pumpe P über die Druckleitung 84 und den Verbindungskanal 68 in den rückwärtigen Zylinderraum 80 des Antriebszylinders. Gleichzeitig ist der Verbindungskanal 68 über den vom Steuerschieber 67 beherrschten Zweigkanal 68b mit dem nunmehr als Hochdruckraum dienenden Niederdruckraum 50 in Verbindung gesetzt. In dieser allerletzten Phase wird daher pro Zeiteinheit eine große Ölmenge in den Zylinderraum 50 eingespeist und demzufolge aus dem Zylinderraum 52 verdrängt. Dieses verdrängte Druckmedium gelangt über den vom Steuerschieber 65 beherrschten Zweigkanal 63 in den Verbindungskanal 48c, um über das 4/4-Wegeventil in den Tank 71 zu gelangen. Gleichzeitig gelangt das aus dem Zylinderraum 48 verdrängte Druckmedium über den Verbindungskanal 48c und das 4/4-Wegeventil in den Tank. Der Abfluß des Druckmediums aus den Zylinderräumen 48, 52 kann daher dank des Druckfühlers 74, 74' mit einer überlagernden Druckregelung erfolgen. Das weitere Öffnen der Spritzgießform sowie auch das Zuhalten der Spritzgießform beim Einspritzen des Kunststoffmaterials in die Spritzgießform 78 können in bekannter Weise (DE 36 44 181 C1) durchgeführt werden.

## Patentansprüche

1. Hydraulikeinrichtung mit Hydraulikpumpe (p) und Regelventil an der Formschließeinheit einer Kunststoff-Spritzgießmaschine, mit wenigstens einem hydraulischen Druckzylinder (20,25) zum Aufbau des Zuhaltedruckes für die Spritzgießform (78), dessen vom Druckkolben (25) begrenzte Zylinderräume (Hochdruckraum 52; Niederdruckraum 50) über steuerbare (Steuerschieber 66) Überströmkanäle (42) des Druckkolbens (25) miteinander in Verbindung setzbar sind,
mit wenigstens einem hydraulischen Antriebszylinder mit stationärem Kolben (47b) zum Schließen und Öffnen der Spritzgießform (78), dessen Bewegungen mit Hilfe eines Streckenspannungswandlers (81) und des Regelventils (164) bei gleichzeitiger, beidseitiger Druckbeeinflussung des Kolbens (47b) nach einem Mengenprogramm mit überlagerter Druckregelung regelbar sind,
und mit wenigstens einem mit dem Niederdruckraum in offener Verbindung stehenden Ausgleichzylinder (21,26), wobei je ein Druckfühler (74,74') in den zu den Zylinderräumen (48,80) des Antriebszylinders mit Kolben (47b) führenden Verbindungskanälen (48c;68) vorgesehen ist, welche Verbindungskanäle (48c;68) über Zweigkanäle (63;68b) mit dem Hochdruckraum (52) und dem Niederdruckraum (50) in Verbindung stehen, welche Zweigkanäle (63;68b) je von einem Steuerschieber (65; 67) beherrscht sind, und wobei die Kolben (25, 26) von Druckzylinder (20) und Ausgleichszylinder (26) über ihre Kolbenstangen mit dem Formträger (13) in Verbindung stehen, dadurch gekennzeichnet, daß das Geschwindigkeits- und Druckprofil (profil) der Schließbewegung beim Schließen der Spritzgießform (78) mindestens durch drei, zeitlich aufeinanderfolgende Schaltstellungen mittels eines 4/4-Wegeventils (164) bestimmbar ist, in welchen Schaltstellungen je der stationäre Kolben (47b) des Antriebszylinders aus dem gießformseitigen Zylinderraum (48) beaufschlagt ist, wobei das profil des überwiegenden Teils der Schließbewegung durch eine Differenzschaltstellung bestimmt ist, bei welcher das aus dem rückwärtigen Zylinderraum (80) des Antriebszylinders verdrängte Druckmedium über einen mit Rückschlagventil (83') versehenen, das 4/4-Wegeventil (164) überbrückenden Zweigkanal (68b, 83) in die Druckleitung (84) einspeisbar ist, und wobei eine der Differenzschaltstellung (Fig. 4) zeitlich vorangehende und nachfolgende Übergangsschaltstellung (Fig. 3) vorgesehen ist, bei welcher das aus dem rückwärtigen Zylinderraum (80) verdrängte Druckmedium über den Ventilkanal (68) und das 4/4-Wegeventil (164) in den Tank (71) gelangt.

2. Hydraulikeinrichtung nach Anspruch 1, dadurch gekennzeichnet, daß das profil des letzten Abschnittes der Schließbewegung durch eine Endschaltstellung (Fig. 5) bestimmbar ist, bei welcher bei aufrechterhaltener Übergangsschaltstellung (Fig. 3) zusätzlich
a) der vom 4/4-Wegeventil zum Zylinderraum (48) des Antriebszylinders mit Kolben (47b) führende Verbindungskanal (48c) über den vom Steuerschieber (65) beherrschten Zweigkanal (63) mit dem Hochdruckraum (52) und
b) der vom Zylinderraum (80) des Antriebszylinders mit Kolben (47b) zum Tank (71) führende Verbindungskanal (68) über den vom Steuerschieber (67) beherrschten Zweigkanal (68b) mit dem Niederdruckraum (50) in Verbindung setzbar sind (Fig. 5).

3. Hydraulikeinrichtung nach Anspruch 1 oder 2, dadurch gekennzeichnet, daß im ersten Abschnitt der Öffnungsbewegung beim Öffnen der Spritzgießform (78) mit großer Kraft der vom Zylinderraum (48) des Antriebszylinders zum Tank (71) führende Verbindungskanal (48c) über den vom Steuerschieber (65) beherrschten Zweigkanal (63) mit dem Hochdruckraum (52) in Verbindung setzbar ist (Fig. 6).

4. Hydraulikeinrichtung nach einem der Ansprüche 1 bis 3, dadurch gekennzeichnet, daß das 4/4-Wegeventil (164) ein proportionalventil mit 0-Überschneidung ist und seine Schaltstellungen bei stufenloser Querschnittsveränderung ineinander überführbar sind.

5. Hydraulikeinrichtung nach einem der vorhergehenden Ansprüche, dadurch gekennzeichnet, daß ein einziger zum zentralen Antriebszylinder mit Kolben (47b) koaxialer Druckzylinder (20,25) und zwei Ausgleichzylinder (21,26) vorgesehen sind, welche diametral zum Druckzylinder (20,25) liegen (Fig. 1).

6. Hydraulikeinrichtung nach einem der Ansprüche 1 bis 4, dadurch gekennzeichnet, daß ein einziger zum zentralen Antriebszylinder koaxialer Ausgleichszylinder (21,26) und zwei Druckzylinder (20,25) vorgesehen sind, welche diametral zum Ausgleichzylinder (21,26) liegen.

## Claims

1. Hydraulic system including hydraulic pump (P) and regulating valve on the mould closing unit of a plastics material injection moulding machine, having at least one hydraulic pressure cylinder (20, 25) for generating the locking pressure for the injection mould assembly (78), the cylinder chambers (high-pressure chamber 52; low-pressure chamber 50) of which are defined by the piston (25) and are adapted so as to be communicable with one another via controllable (control valve 66) transfer passages,
including at least one hydraulic driving cylinder with stationary piston (47b) for the closing and opening of the injection mould assembly (78), the movements of which are controllable using a displacement voltage converter (81) and the regulating valve (164) at the same time as the pressure is applied to the piston (47b) on both sides in accordance with a volume program with superimposed pressure control,
and having at least one compensating cylinder (21, 26), freely communicating with the low-pressure chamber, a pressure sensor (74, 74') being provided in each of the communicating passages (48c;68) which lead to the cylinder chambers (48, 80) of the driving cylinder with piston (47b), which communicating passages (48c;68) are connected by branch passages (63;68b) to the high-pressure chamber (52) and the low-pressure chamber (50), each of which branch passages (63;68b) being controlled by a control valve (65; 67), and the pistons (25, 26) of the pressure cylinder (20) and the compensating cylinder (26) being connected by their piston rods to the mould carrier (13), characterised in that the velocity and pressure changes (development) during the closing movement, when the injection mould assembly (78) is closed, are determinable by at least three, chronological control positions through the intermediary of a 4/4-way valve (164), in each of which control positions pressure is applied from the mould-side cylinder chamber (48) to the stationary piston (47b) of the driving cylinder, the changes (velocity and pressure) in the major part of the closing movement being determined by a differential control position, in which the pressure medium, displaced from the rear cylinder chamber (80) of the driving cylinder, is feedable into the pressure line (84) via a branch passage (68b, 83) which by-passes the 4/4-way valve (164) and is provided with a non-return valve (83'), and the differential control position (Figure 4) being preceded and succeeded by the transitional control position (Figure 3), in which position the pressure medium displaced from the rear cylinder chamber (80) flows through the valve passage (68) and the 4/4-way valve (164) into the reservoir (71).

2. Hydraulic system according to claim 1, characterised in that the changes during the final phase of the closing movement are determinable by an end control position (Figure 5), in which position, with the transitional control position maintained (Figure 3), in addition
a) the communicating passage (48c), which leads from the 4/4-way valve to the cylinder chamber (48) of the driving cylinder with piston (47b), can be adapted to communicate with the high-pressure chamber (52) via the branch passage (63) which is controlled by the control valve (65) and
b) the communicating passage (68), which leads from the cylinder chamber (80) of the driving cylinder with piston (47b) to the reservoir (71), can be adapted to communicate with the low-pressure chamber (50) via the branch passage (68b) which is controlled by the control valve (67).

3. Hydraulic system according to claim 1 or 2, characterised in that in the initial phase of the opening movement, when the injection mould assembly (78) is opened by a strong force, the communicating passage (48c), leading from the cylinder chamber (48) of the driving cylinder to the reservoir (71), is communicable with the high-pressure chamber (52) via the branch passage (63), which is controlled by the control valve (65).

4. Hydraulic system according to one of the claims 1 to 3, characterised in that the 4/4-way valve (164) is a proportional valve having a zero overlap and its control positions are convertible into one another with the cross-section changing in a stepless manner.

5. Hydraulic system according to one of the preceding claims, characterised in that one single pressure cylinder (20, 25) which is coaxial to the central driving cylinder with piston (47b) and two compensating cylinders (21, 26), which are situated diametrically relative to the pressure cylinder (20, 25) (Figure 1), are provided.

6. Hydraulic system according to one of the claims 1 to 4, characterised in that one single compensating cylinder (21, 16) which is situated coaxially relative to the central driving cylinder and two pressure cylinders (20, 25), which are situated diametrically relative to the compensating cylinder (21, 26), are provided.

## Revendications

1. Installation hydraulique, comprenant une pompe hydraulique (P) et un distributeur de régulation, pour le dispositif de fermeture de moule d'une presse d'injection de matière plastique, avec au moins un cylindre de pression hydraulique (20, 25) destiné à établir la pression de verrouillage pour le moule d'injection (78) et dont les chambres de cylindre (chambre à haute pression 52 ; chambre à basse pression 50) délimitées par le piston de pression (25) peuvent être mises en communication mutuelle par l'intermédiaire de canaux de trop-plein (42) asservissables (tiroirs de commande 66) du piston de pression (25),
avec au moins un cylindre d'entraînement hydraulique à piston stationnaire (47b) pour la fermeture et l'ouverture du moule d'injection (78), dont les mouvements peuvent être régulés à l'aide d'un convertisseur (81) et du distributeur de régulation (164), avec une sollicitation en pression bilatérale et simultanée du piston (47b) selon un programme de débit par une régulation de pression prioritaire,
et avec au moins un cylindre de compensation (21, 26) qui se trouve en communication ouverte avec la chambre à basse pression, un capteur de pression respectif (74, 74') étant prévu dans les canaux de liaison (48c ; 68) menant aux chambres de cylindre (48, 80) du cylindre d'entraînement à piston stationnaire (47b), canaux qui communiquent avec la chambre à haute pression (52) et la chambre à basse pression (50) par l'intermédiaire de canaux de dérivation (63 ; 68b) qui sont chacun contrôlés par un tiroir de commande (65 ; 67), et les pistons (25, 26) du cylindre de pression (20) et du cylindre de compensation (21) étant reliés au porte-moule (13) par l'intermédiaire de leurs tiges de piston,
caractérisée en ce que le profil de vitesse et de pression (simplement appelé ci-après « profil ») du mouvement de fermeture du moule d'injection (78) peut être déterminé par au moins trois positions de commutation d'un distributeur 4/4 voies (164), successives dans le temps et dans chacune desquelles le piston stationnaire (47b) du cylindre d'entraînement est sollicité à partir de la chambre de cylindre (48) côté moule, le profil de la majeure partie du mouvement de fermeture étant déterminé par une position de commutation différentielle dans laquelle le fluide sous pression refoulé de la chambre de cylindre arrière (80) du cylindre d'entraînement peut être alimenté dans la conduite de pression (84) par l'intermédiaire d'un canal de dérivation (68b, 83) surmontant le distributeur 4/4 voies (164) et doté d'un clapet antiretour (83'), et une position de commutation de transition (figure 3) précédant et succédant dans le temps la position de commutation différentielle (figure 4) étant prévue, dans laquelle le fluide de pression refoulé de la chambre de cylindre arrière (80) arrive dans le réservoir (71) en passant par le canal de distributeur (68) et le distributeur 4/4 voies (164).

2. Installation hydraulique selon la revendication 1, caractérisée en ce que le profil de la dernière partie du mouvement de fermeture peut être déterminé par une position de commutation finale (figure 5) dans laquelle en outre, tout en conservant la position de commutation de transition (figure 3) :
a) le canal de liaison (48c) menant du distributeur 4/4 voies à la chambre de cylindre (48) du cylindre d'entraînement à piston (47b) peut être mis en communication avec la chambre à haute pression (52) par l'intermédiaire du canal de dérivation (63) contrôlé par le tiroir de commande (65), et
b) le canal de liaison (68) menant de la chambre de cylindre (80) du cylindre d'entraînement à piston (47b) au réservoir (71) peut être mis en communication avec la chambre à basse pression (50) par l'intermédiaire du canal de dérivation (68b) contrôlé par le tiroir de commande (67) (figure 5).

3. Installation hydraulique selon la revendication 1 ou 2, caractérisée en ce que, dans la première partie du mouvement d'ouverture lors de l'ouverture du moule d'injection (78) avec une grande force, le canal de liaison (48c) menant de la chambre de cylindre (48) du cylindre d'entraînement au réservoir (71) peut être mis en communication avec la chambre à haute pression (52) par l'intermédiaire du canal de dérivation (63) contrôlé par le tiroir de commande (65) (figure 6).

4. Installation hydraulique selon l'une des revendications 1 à 3, caractérisée en ce que le distributeur 4/4 voies (164) est un distributeur proportionnel avec recoupement par zéro, et on peut passer de l'une à l'autre de ses positions de commutation par une modification continue de la section d'écoulement.

5. Installation hydraulique selon l'une des revendications précédentes, caractérisée en ce qu'il est prévu un seul cylindre de pression (20, 25), coaxial au cylindre d'entraînement central à piston (47b), et deux cylindres de compensation (21, 26) qui sont disposés diamétralement au cylindre de pression (20, 25) (figure 1).

6. Installation hydraulique selon l'une des revendications 1 à 4, caractérisée en ce qu'il est prévu un seul cylindre de compensation (21, 26), coaxial au cylindre d'entraînement central, et deux cylindres de pression (20, 25) qui sont disposés diamétralement au cylindre de compensation (21, 26).
